# EUROPEAN PATENT SPECIFICATION

(11) **EP 2 838 793 B1**
(45) Date of publication and mention of the grant of the patent: **17.10.2018**
(21) Application number: 13720754.4
(22) Date of filing: 11.04.2013
(51) Int. Cl.: B64C 27/00, B64D 17/80

(54) **PARACHUTE RESCUE SYSTEM**
FALLSCHIRMRETTUNGSSYSTEM
SYSTÈME DE SECOURS À PARACHUTE

(30) Priority: 16.04.2012 CZ 20120258; 28.03.2013 CZ 20130236
(43) Date of publication of application: 25.02.2015
(73) Proprietor: Stratos 07 s.r.o., 120 00 Praha 2 (CZ)
(72) Inventor: STRAKA, Josef, 120 00 Praha 2 (CZ)
(74) Representative: Cerych, Ondrej
(86) International application number: PCT/CZ2013/000048
(87) International publication number: WO 2013/156004

(56) References cited:
- AU-B3- 732 958
- CA-A1- 2 118 268
- DE-A1- 2 503 461
- DE-A1- 3 617 294
- US-A- 2 812 147

## Description

### Field of the invention

The invention relates to the aircraft with at least two rotating blades such as helicopters or gyroplanes with parachute rescue system.

### Background of the invention

Up to the present are parachute rescue systems relatively routinely used especially for ultralight aircrafts aiming to the rescue of these aircrafts and their crews in crisis situations during the flight, such as at accidents owing to a mutual collision, to an engine failure or the loss of possibility to manage the aircraft, its destruction and accidents like that. Usually it concerns rescue systems, consisting of at least one rescue parachute, that is packed in a mounting box and has a rocket engine. Rescue systems may be furnished as well by another driving mechanism for carrying of the rescue parachute out in case of emergency, such as a spring-actuated or an air-operated mechanism, or possibly by a gas producer. These rescue systems may be than if necessary activated by activating handles or other starting devices installed within the pilots reach and connected by an activating wiring with the out-carrying mechanism of the rescue parachutes.

From the patent record CZ 285318 is in this way known the parachute rescue system especially for ultralight aircrafts, hang-gliders and engine three-wheelers, activated by a rocket engine, that carries out of the aircraft range the parachute canopy packed in the inner box. The inner box is inserted together with the suspension ropes and the connecting belt in an outside box, with a separated cover. The rocket engine, fastened on the outside box, is connected by a connecting rope with the inner box and the connecting belt, connected with the carrying ropes of the parachute, is by its other free end, provided with a propelling snap hook, grappled to the aircraft fuselage. The release of the rocket engine is connected by a control rope with a handle, which is in the reach of the pilot. From the patent record EP 5 1509448 is as well known a rescue mechanism of the aircraft, where the parachute system is completed in the bottom of the aircraft by air bags, working as usual airbags and absorbing the shock of the impact.

As well this, as other known solutions, cannot be used with helicopters, gyroplanes and other aircrafts with a rotating blade, in view of the vertical rotor axis of their rotors. To a certain extent is the problem of use of these rescue systems solved by parachute systems for helicopters accordingly with the patent record US 6,199,799; according to it is the rescue parachute placed in the upper extension of the helicopter over the blades of its rotor. This solution is possible only by helicopters with a hollow rotor, through which goes the suspension bar of the upper extension.

The document US 2 812 147 disclosed parachute support systems wherein a parachute is stored inside a domed housing fixed above the helikoptér rotor during normal flight operation. The dome housing are affixed to the top of the helicopter rotor shafts, thus all loads from the parachute are focused on the tip of the rotor shafts, which may cause mechanical failure due to high moment loads at that point. These systems also require a large numbers of parts, leading to high weight and complexity, and have high profiles that may cause high drag during normal flight operations.

The document CA 2 118 268 disclosed aerodynamically shaped parachute container which is attached to the top of the helicopter rotor shafts above the rotor blades. As far as this document could be understand this document discloses here only parachute ejection of the container and its opening in case of emergency by radio signals from the cockpit and appropriate radio device.

The document AU 732 958 disclosed parachute device for helicopters, which is adapted to be mounted on a rotor drive shaft of a helicopter to assist in safe landing of the same. Parachute device is adapted for use with a helicopter having a tubular rotor drive shaft, and comprises: an elongate hollow mounting member having top and bottom ends, and a hole that extends longitudinally through the top and bottom ends, the bottom end of the mounting member being adapted to be mounted securely to the helicopter, the mounting member being adapted to be extended pivotally inside the rotor drive shaft such that the top end of the mounting member projects.

The document DE 25 03 461 disclosed helikoptér rotor attached parachute, wherein two part rocket assisted container to avoid twisting of lines due to rotation. The equipment is in a two-part container. The lower part is secured to the rotor blades whilst the upper which houses and is connected to the parachute is rotationally separated from the lower. The connection between them is a double-row ball bearing. In the centre of the container is a rocket, fired upwards by radio signal to deploy the parachute. The separation of the two parts of the container prevents the parachute lines becoming twisted even if the rotor or helicopter is rotating. As further insurance two rotatable links are fitted to the cable from the parachute to the aircraft.

From the patent record US 5,836,544 is then known an emergency landing system for helicopters, which encloses at least one parachute and is simultaneously fulfilled by bottom airbags, located under the bottom part of the helicopter. But this solution can be used especially for large size helicopters, where it is possible to place the parachutes in such position, in which their connecting ropes with the helicopter are out of the revolving rotor range.

Another document which represents the prior art from the viewpoint of solving the same problems is the document DE 36 17 294 A1 which is based on the fact that the parachute is attached to the airplane above its rotating blades. This technical solution mainly loads the rotor throughout the whole operation of the airplane and undermines its aerodynamics. This has negative implications on the whole airplane structure. During a forward movement of the rotating wing airplane, when an opened parachute acts perpendicularly on the axis of the rotor, the parachute causes great rotor axis stresses which can lead to its damage.

### Summary of the Invention

The subject matter of the invention is defined by claim 1 and comprises an aircraft with at least two rotating blades such as helicopters or gyroplanes with a parachute rescue system consisting at least of one rescue parachute being packed before activation in a mounting box and equipped with a rocket engine or as well by another driving mechanism connected by an activating wiring with an activating handle installed within the pilots reach, and one or more single rescue parachutes are fastened around the rotor of the aircraft under the rotating blades by at least one derrick guy that comes after the system activation through said rotating blades upwards thereby the derrick guy being provided with a rope swivel-type head in order to eliminate the transfer of the rotor rotational movement to the parachute ropes.

The rope swivel-type head comprises the relatively revolving stacked revolving eyes, the bottom lifting eye being fastened by one of its ends to the derrick guy, the upper revolving eye being fastened to the at least one rescue parachute.

The derrick guy is by its other end fastened to the ring swivel-type head arranged about the rotor under its rotating blades by means of a supporting collar with fastening soles for fastening the swivel-type head to the aircraft, the supporting collar being provided towards it by a relatively rotating fastening collar with at least one catching eye for fastening the derrick guy thereto.

The supporting collar and the fastening collar of the swivel-type head are coaxial and are placed in a plane vertical to the rotor axle with the center of rotation in the rotor axle, the fastening collar being placed under the supporting collar, the fastening soles being concurrently arranged on the inner perimeter of the supporting collar, the catching eyes being arranged on the external perimeter of the fastening collar.

The derrick guy is for fastening around the rotor provided by its other end with a clamping guy loop around the rotor.

The parachute rescue system according to the invention may be in this way by its supporting collar fastened better optimally to the aircraft fuselage, to its engine or reducer, which secures its maximal carrying capacity. During the system activation comes as the effect of the rocket engine or other driving mechanism to carrying out, and usually from the side of the aircraft with a rotating blade, as are helicopters and gyroplanes, of one or more rescue parachutes to a sufficient distance from the aircraft, that after filling of the parachute canopy or canopies and after it by sliding out of their derrick guy over the rotating rotor blades they get in case of need over the aircraft with rotating blade, respectively over the helicopter or gyroplane and enable in this way its safe landing.

In another embodiment of the invention may be the derrick guy for attachment around of the rotor provided on its end otherwise only by a guy sling, which after the carrying out of the rescue parachute contracts around of the rotor axle, nevertheless in the above mentioned most favorable embodiment after the activation of the rescue system does not threaten the damage of rotor adjusting elements, prevented is the extreme rotor axles overloading during the opening of the parachutes and the whole system of the of the rotor adjusting stays functional. The rescue, respectively safe landing, is in this case possible even with the loss of the rotor. Of course it must be, especially in the case of the derrick guy, an enough strong guy, such as steel cable, aramid cable, called as well as kevlar, in order not to disturb the rotor by its sliding out.

The advantage of the solution by this invention is especially in improving of the safety of the crew and preventing of engine damage during emergence of any crisis situations, which was till now problematic in respect to the above mentioned vertical rotary axis of their rotors. Especially by helicopters is during the activation of the rescue system the mechanic system of rotor blades not damaged, control and the periodicity of rotor blades running is preserved for a more safe descent.

For a correct function of the ballistic rescue system is fully sufficient one rescue parachute, combined through the canopy rope and the swivel-type head with a derrick guy. But more efficient is the use of more rescue parachutes, the best of three, interlocked together to one parachute system, located either in one storage box, divided optimally according to the number of rescue parachutes, or possibly as well in more storage boxes, and in this case are the rescue parachutes carried out by one rocket engine and they are fastened with one common swivel-type rope and one swivel-type head by one derrick guy.

Nevertheless it may be possible to take as well into consideration the use of more separate parachutes, placed singly in separately storage boxes, and they may be carried out from various sides of the helicopter or gyroplane by separate rocket engines; in this case are they fastened over separate swivel-type ropes and swivel-type heads around the rotor by separate derrick guys.

### Brief Description of the Drawings

The invention will be hereafter explained by drawings of particular examples of parachute rescue system embodiment according to the invention, where it represents
Fig. 1 - the most expedient example of the embodiment with the revolving collar head including the schematic suggestion of the rescue parachute after the activation of the rescue system,
Fig. 2 - detail of the rope swivel-type head,
Fig. 3 - the parachute rescue system on an aircraft with a rotating blade before the activaton,
Fig. 4 - the parachute rescue system with three rescue parachutes during the activation,
Fig. 5 - the parachute rescue system on an aircraft with a rotating blade before the activation in the second example embodiment with guy sling.

### Examples of the Invention Embodiment

### Example 1

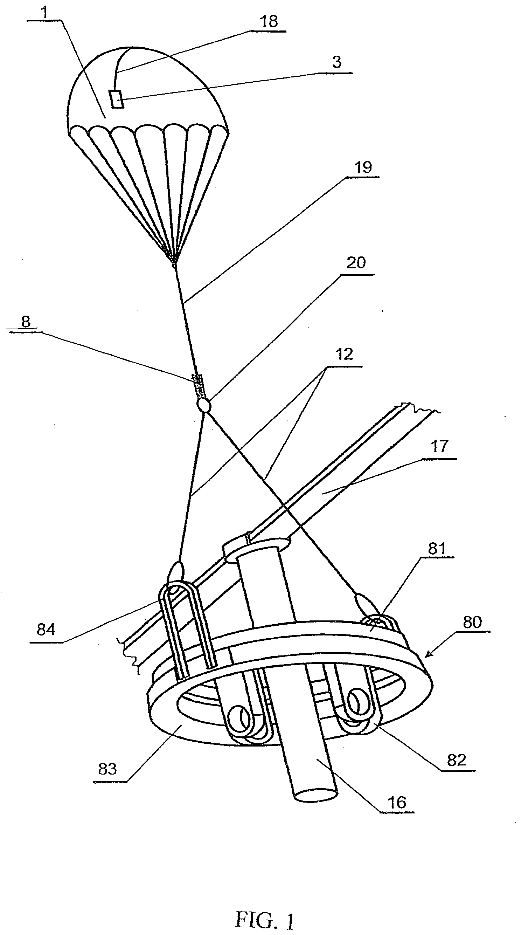

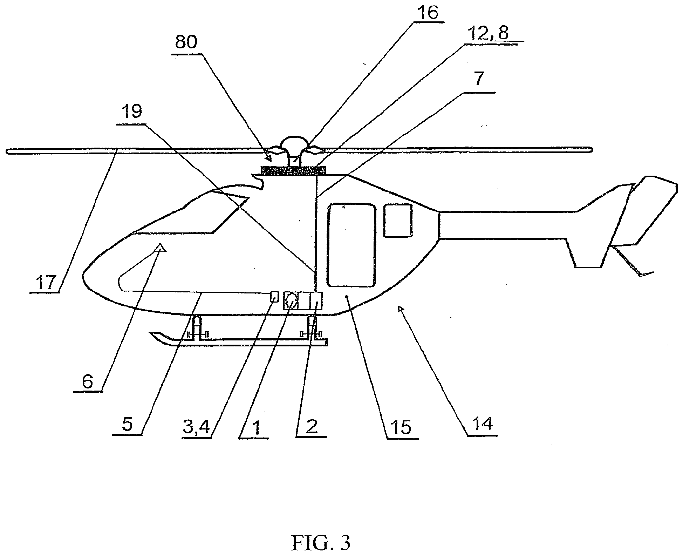

The parachute suspender of the rescue system for aircraft 14, as are helicopters or gyroplanes, consists in the most favorable embodiment, represented on the Fig.1 till Fig.3, from one rescue parachute 1 that is packed before the system activation in a mounting box 2 and is furnished by a rocket engine 3 located in the rocket box 4 connected by an activating wiring 5 with the activating handle 6 installed within the pilots reach. The mounting box 2 with the rescue parachute 1 is before the system activation covered in the coat 15 of the aircraft 14 respectively in this embodiment example in the side coat of the helicopter.

The rescue parachute 1 is by its canopy rope 19 fastened to the aircraft 14 under the rotating blades 17 of its rotor 16 by two derrick guys. 12, which go after the system activation end through these rotating blades 17 in the direction upwards, and the canopy rope 19 of the rescue parachute 1 is by derrick guys. 12 connected by the rope swivel-type head 8 for elimination of the rotor 16 rotation transfer on the parachute ropes. The connection of both derrick guys. 12 with the rope swivel-type head 8 by the rope swivel-type head suspension rope 7 is secured by a snap hook 20.

As evident in detail from the Fig. 1, are both derrick guys 12 by their second end fastened by their second ends to a ring swivel-type head 80, arranged around of the rotor 16 under its rotating blades 17. This ring swivel-type head 80 is made by a supporting collar 81. with fastening soles 82 for fastening of the swivel-type head 80 to the here not represented aircraft 14, and the supporting collar 81 is provided towards it by pivotally placed fastening collar 83 with two catching eyes 84 placed one against the other for fastening of the derrick guys 12. The derrick guy 12 with the snap hook 20 and a rope swivel-type head 8 of the canopy rope 19 are before the activation of the system placed on a ring swivel-type head 80, as indicated by relevant reference signs on the Fig. 3.

The supporting collar 81 and to it pivotally placed fastening collar 83 of the ring swivel- type head 80 are placed in a plane vertical to the rotor 16 axle with the centre of rotation of the fastening collar 83 in the rotor 16 axle and coherently is the fastening collar 83 placed under the supporting collar 81 The fastening soles 82 are concurrently arranged on the inner perimeter of the supporting collar 81 and the catching eyes 84 on the external perimeter of the fastening collar 83. Between the supporting collar 81 and the fastening collar 83 is placed a not represented thrust bearing.

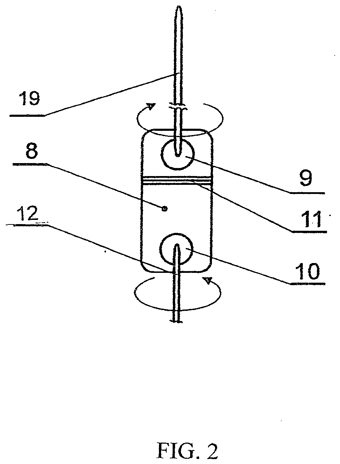

As evident in detail from the Fig. 2, the canopy rope 19 of the rescue parachute 1 is fastened into the upper revolving lifting eye 9 and the derrick guys 12 over the here not represented snap hook 20 into the bottom revolving lifting eye 10 of the rope swivel-type head. Of course instead of the snap hook 20 may be used another lifting component, or the derrick guy 12 may be pulled directly through the bottom revolving lifting eye 10 The rope swivel-type head 8 is provided in the dividing plane 11 by the as well not represented thrust bearing, to enable mutual rotation of both revolving lifting eyes 9 and 10 one to another in the direction marked by the dart. From Fig. 1 is obvious, that after the activation of the system and after the side carrying of the rescue parachute 1 out into the exterior environment comes to its unfolding over the rotating blades 17 of the engine rotor 16, which enables its safe landing. The burnt out rocket engine 3, as is as well obvious from Fig. 1, remains at it fastened through the connecting fabric binding 18 on the canopy of the rescue parachute 1.

### Example 2

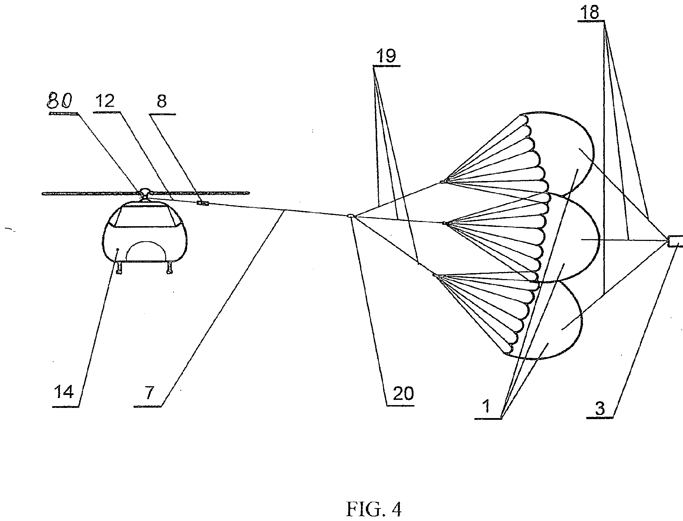

On the Fig. 4 is then represented a similar embodiment of the invention with three rescue parachutes 1 their canopy ropes 19 are with the derrick guys 12 connected over the snap hooks 20 and one common suspension rope 7. As is evident from the Fig. 4, after the system activation are the rescue parachutes 1 carried out into the exterior environment and they as well settle themselves over the rotating blades 17 of the engine rotor 16 and enable its safe landing. The connecting fabric binding serves to concurrent carrying out of all rescue parachutes 1 by one rocket engine 3.

### Example 3

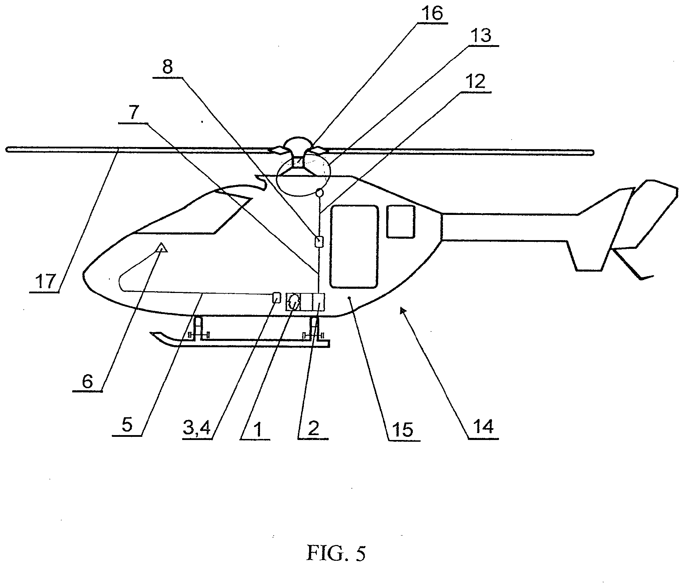

The parachute rescue system on the third example of the embodiment of the invention, represented on the Fig. 5, consists as well from three rescue parachutes 1, coupled into one parachute system; they are before the system activation packed in one mounting box 2, divided in three mounting sections and they are furnished by one common rocket engine 3 placed in the rocket box 4, connected by the activating wiring 5 with the activating handle 6, installed within the pilots reach.

Separate rescue parachutes 1 are with their parachute cordes and the canopy ropes 19 as in the 2^{nd} example of embodiment connected by here not represented snap hooks 20 with one suspension rope 7, which is by a swivel-type head 8 connected with the derrick guy 12

In contrast with the embodiment example 1 is the derrick guy 12 on its end furnished by a guy clamping loop 13, arranged around the rotor 16 of the aircraft 14 with a rotating blade 14 under its rotating blades 17.

As the mounting box 2 with the rescue parachutes 1 and their suspension rope 7, as well as the rocket box 4 with the rocket engine 3 and the derrick guy 12 with the clamping loop 13 are before the system activation V covered in the coat 15 of the aircraft 14 respectively in this embodiment exemple in the side coat of the helicopter.

Although all above mentioned examples of the embodiment of the invention concern so called ballistic rescue systems, where the rescue parachutes 1 are carried out by the rocket engine 3, still it is possible to use for carrying out of rescue parachutes 1 as well other driving gears, mentioned in the description of the present state of the engineering, it means i.e. spring-actuated or air-operated mechanisms, or possibly gas producers, without touching the substance of the invention itself.

### Field of the Application

It is possible to use the invention especially as by gyroplanes, as well by helicopters with exception of helicopters with contra-rotating rotors, working in one axle.

### List of reference signs

I rescue parachute
2 mounting box
3 rocket engine
4 rocket box
5 activating wiring
6 activating handle
7 suspension rope
8 rope swivel-type head
9 upper revolving lifting eye
10 bottom revolving lifting eye
11 dividing plane
12 derrick guy
13 clamping loop
14 rotary-wing aircraft
15 coat
16 rotor
17 rotating blades of the rotor
18 fabric binding
19 canopy rope
20 snap hook
80 ring swivel-type head
81 supporting collar
82 fastening soles
83 fastening collar
84 catching eye

## Claims

1. Aircraft with at least two rotating blades such as helicopters or gyroplanes with a parachute rescue system consisting at least of one rescue parachute (1) being packed before activation in a mounting box (2) and equipped with a rocket engine (3) or as well by another driving mechanism connected by an activating wiring (5) with an activating handle (6) installed within the pilot's reach,
**characterized by** the fact that
one or more single rescue parachutes (1) are fastened around the rotor (16) of the aircraft under the rotating blades (17) by at least one derrick guy (12), that comes after the system activation through said rotating blades (17) upwards thereby the derrick guy (12) being provided with a rope swivel-type head (8) in order to eliminate the transfer of the rotor (16) rotational movement to the parachute ropes.

2. Aircraft according to claim 1, **characterized by** the fact that the rope swivel-type head (8) comprises two relatively revolving stacked lifting eyes (9, 10), the bottom revolving eye (10) being fastened by one of its ends to the derrick guy (12) the upper revolving eye (9) being fastened to the at least one rescue parachute (1).

3. Aircraft according to claim 1 or 2, **characterized by** the fact that the derrick guy (12) is by its other end fastened to the ring swivel-type head (80), arranged about the rotor (16) under its rotating blades (17), by means of a supporting collar (81) with fastening soles (82) for fastening the swivel-type head (80) to the aircraft, the supporting collar (81) being provided towards it by a relatively rotating fastening collar (83) with at least one catching eye (84) for fastening the derrick guy (12) thereto.

4. Aircraft according to claim 3, **characterized by** the fact that the supporting collar (81) and the fastening collar (83) of the swivel-type head (80) are coaxial and are placed in a plane vertical to the rotor (16) axle with the center of rotation in the rotor (16) axle, the fastening collar (83) being placed under the supporting collar (81), the fastening soles (82) being concurrently arranged on the inner perimeter of the supporting collar (81), the catching eyes (84) being arranged on the external perimeter of the fastening collar (83).

5. Aircraft according to claim 1 or 2, **characterized by** the fact that the derrick guy (12) is for fastening around the rotor (16) provided by its other end with a clamping guy loop (13) around the rotor (16).

## Patentansprüche

1. Flugzeug mit mindestens zwei rotierenden Flügeln wie Helikoptere oder Tragschrauber mit einem Rettungsfallschirmsystem, welcher mindestens aus einem vor Aktivierung in einem Auflagebehälter (2) zusammengesetzten Fallschirm (1) mit einem Raketenmotor (3) oder einer anderen Antriebsvorrrichtung besteht, gebunden mit einer Aktivierungsleitung (5) mittels eines Aktivierungshebels (6) in Reichweite des Flugzeugführers, **dadurch gekennzeichnet, dass**
ein Fallschirm oder mehrere Fallschirme (1) ringum des Flugzeugrotors (16) unter dessen rotierenden Flügeln (17) mindestens mit einem Ankerseil (12) befestigt sind, welcher nach Aktivierung des Systems zwischen diesen rotierenden Flügeln aufwärts gerichtet ist, wobei das Ankerseil mit einer Seildrehaufhängung (8) für Eliminierung der Übertragung der Rotationsbewegung des Rotors16) an die Fallschirmseile versehen ist.

2. Flugzeug nach Patentanspruch 1, **dadurch gekennzeichnet, dass** die Seildrehaufhängung (8) zwei relative Dreheinhängeöse (9, 10) enthält, wobei die untere Dreheinhängeöse (10) mit einem seiner Enden an dem Ankerseil (12) und die obere Dreheinhängeöse mindestens an einem Rettungsfallschirm besfestigt sind.

3. Flugzeug nach Patentanspruch 1 oder 2, **dadurch gekennzeichnet, dass** das Ankenseil (12) mit seinem anderem Ende an der Drehringaufhängung (80) befestigt ist, welche ringum des Rotors (16) unter dessen rotierenden Flügeln (17) mittels eines Trägerrings (81) mit Befestigungsschellen (82) für die Befestigung der Drehringaufhängung (80) an dem Flugzeug angeordnet ist, wobei der Trägerring (81) mit einem relativ rotierenden Befestigungring (83) und mit mindestens einer Halteröse (84) für die Befestigung des Ankerseils (12) versehen ist.

4. Flugzeug nach Patentanspruch 3, **dadurch gekennzeichnet, dass** der Trägerring (81) und der Befestigungsring (83) der Drehringaufhängung (80) koaxial sind und in Vertikalebene zur Rotorachse (16) mit Rotationsmittelpunkt in der Rotorachse (16) gestaltet sind, wobei sich der Befestigungsring (83) unter dem Tragring (81) befindet und die Befestigungsschellen (82) sind gleichlaufend an der inneren Peripherie des Trägerrings (81) und die Halterösen (84) an der äusseren Peripherie des Bedestigungsrings (83) angeordnet.

5. Flugzeug nach Patentanspruch 1 oder 2, **dadurch gekennzeichnet, dass** das Ankerseil (12) ist zwecks der Befestigung ringum des Rotors (16) an seinem zweiten Ende mit einer Ankerschleife (13) ringum des Rotors (16) versehen.

## Revendications

1. Avion ayant au moins deux ailes tournants comme un hélicoptère ou un gyroplan avec un système de parachute sauveteur (1) lequel avant l'activation est plié dans un boîtier (2) avec un moteur-fusée (3) ou avec un autre dispositif motrice qui est lié avec une conduite d'activation (5) par un levier de commande (6) situé à la portée de la main du pilote, **caractérisé en ce qu'**un parachute ou plusieurs parachutes sauveteurs (1) sont fixés autour du moteur (16) de l'avion sous ses ailes tournants (17) au moins par un hauban (12) lequel après activation du système passe entre ces ailes tournants (17) vers le haut, le hauban (12) contenant un câble de suspension pivotant (8) pour éliminer le transport du mouvement rotatif du rotor (16) aux câbles du parachute.

2. Avion selon la revendication 1, **caractérisé en ce que** le câble de suspension pivotant (8) contient deux oeillets de suspension relatifs pivotants (9, 10), tandisque l'oeillet inférieur (10) est fixé par une de ses exrrémités sur le hauban (12) et l'oeillet supérieur (9) est fixé au moins sur l'un des parachutes sauveteurs (1).

3. Avion selon la revendication 1 ou 2, **caractérisé en ce que** le hauban (12) est fixé par sa deuxième extrémité sur une suspension annulaire pivotante (80) arrangée autour du rotor (16) sous ses ailes tournants (17) par une bague porteuse pivotante (81) avec des pattes de fixation (82) pour fixer la suspension annulaire pivotante (80) sur l'avion, la bague porteuse (81) étant munie par une bague de fixation pivotante (83) avec au moins un oeillet d'attache (84) pour fixer le hauban (12).

4. Avion selon la revendication 3, **caractérisé en ce que** la bague porteuse (81) et la bague de fixation (83) de la suspension annulaire pivotante (80) sont coaxiales, ces bagues étant situées dans le plan vertical à l'axe du rotor (16) avec un centre de rotation dans l'axe du rotor (16), la bague de fixation (83) étant située sous la bague porteuse (81), les pattes de fixation (82) sont disposées parallèlement sur la périphérie intérieure de la bague porteuse (81) et les oeillets d'attaches (84) sont placés sur la périphérie extérieure de la bague de fixation (83).

5. Avion selon la revendication 1 ou 2, **caractérisé en ce que** le hauban (12) pour être fixé autour du rotor (16) est muni sur son extrémité secondaire par une boucle d'ancrage (13) autour du rotor (16).
